**Europäisches Patentamt**

**European Patent Office**

**Office européen des brevets**

(19)

(11) Publication number : **0 485 355 A1**

(12) **EUROPEAN PATENT APPLICATION**

(21) Application number : **91890237.0**

(22) Date of filing : **09.10.91**

(51) Int. Cl.$^5$ : **B01D 19/02, D21B 1/32**

(30) Priority : **08.11.90 US 610561**

(43) Date of publication of application :
**13.05.92 Bulletin 92/20**

(84) Designated Contracting States :
**AT BE CH DE DK ES FR GB GR IT LI LU NL SE**

(71) Applicant : **Kamyr, Inc.**
**Ridge Center**
**Glens Falls New York 12801-3686 (US)**

(72) Inventor : **Chamblee, Wayne J., c/o Kamyr, Inc.**
**Ridge Center**
**Glens Falls, New York 12801-3686 (US)**
Inventor : **Torregrossa, Louis O., c/o Kamyr, Inc.**
**Ridge Center**
**Glens Falls, New York 12801-3686 (US)**
Inventor : **Greenwood, Brian F., c/o Kamyr, Inc.**
**Ridge Center**
**Glens Falls, New York 12801-3686 (US)**

(74) Representative : **Haffner, Thomas M., Dr.**
**Patentanwaltskanzlei Dipl.-Ing. Adolf**
**Kretschmer Dr. Thomas M. Haffner**
**Schottengasse 3a**
**A-1014 Wien (AT)**

(54) **Foam removal from receiving tanks of gas sparged hydrocyclones.**

(57) Foam typically forms in a receiving tank (10, 110) from either the underflow or overflow from a gas sparged hydrocyclone (12). Particularly in processing of paper pulp to deink the pulp or to remove sticky contaminants from it, the foam in the receiving tank has many undesirable materials which are preferably removed. Foam from the receiving tank (10) is removed with a vacuum box (29) or an overflow weir. To facilitate concentration of the foam, the discharge of fluent material from the bottom (27) of the receiving tank is preferably via a tangential discharge line (26) so that a swirling action takes place in the tank and the foam collects near the cylindrical side wall (24) of the tank. The foam may be removed by vacuum caused by a blower 32), and the foam and entrained liquid is separated from the air (at 34) before the air reaches the blower. The foam and entrained liquid may be dewatered, or compounds therein having a high BOD and COD load are separated. An alternative construction of receiving tank (110) includes a gas introduction device (51) at one side portion causing gas to blow foam toward an opposite side portion to a foam outlet (58), with a liquid spray (from 59) for breaking foam bubbles at the outlet. A generally horizontal baffle (55), and optional vertical baffles (53, 56), prevent short circuiting of fluent material from an inlet (123) to the fluent material outlet (126) of the tank.

FIG. 3

EP 0 485 355 A1

## BACKGROUND AND SUMMARY OF THE INVENTION

A gas sparged hydrocyclone -- such as shown in U.S. patents 4,279,743, 4,399,027, and 4,838,434 -- is becoming an increasingly popular tool for a number of different processes, such as the removal of sticky contaminants during paper recycling, or deinking of recycled paper pulp.

Typically, when processing with a gas sparged hydrocyclone is completed, there is an underflow and an overflow. Both the underflow and overflow are ultimately fed to a receiving tank prior to further processing. In the practice of a number of methods utilizing gas sparged hydrocyclones, it has been found that foam will accumulate on the surface of the liquid or other fluent material in the receiving tanks. This accumulation of foam is caused by a combination of two factors, the existence of residual gas (in both the overflow and underflow from the hydrocyclone) even if deaerating is practiced, and as a result of gas which is entrained due to impact as the fluent material stream from the hydrocyclone enters a receiving tank. The foam accumulating on the surface of the receiving tank fluid is in many cases very undesirable, and must be removed if further proper treatment is to efficiently take place.

According to the present invention, the foam on the fluid surface in the receiving tanks is removed, for example by a vacuum arrangement, or an overflow weir, or by blowing it with a gas stream at one side portion of the tank toward an opposite side portion. Where a vacuum removal system is utilized, preferably a floating vacuum box is used, which is operatively connected to a blower or like suction device, with a separator in the removal conduit for separating out foam and entrained liquid from the air flow, and then either dewatering or stripping the removed foam and entrained liquid, prior to disposal.

According to the present invention, it is highly desirable to cause the foam to collect at a particular area of the tank so that it may be readily removed. This is accomplished in one embodiment by providing a tangential discharge from the side wall, adjacent the bottom of the tank, which causes a swirling action in the tank and causes foam to collect along the perimeter of the tank, adjacent the side wall. The weir or vacuum box may then be located at this perimeter portion. In another embodiment this is accomplished by a constant generally horizontally directed stream of gas at the fluent material surface.

While the invention is utilizable in many processes, it is particularly effective in a method of removing ink and/or sticky contaminants from recycled paper cellulosic pulp containing ink and/or sticky contaminants. Such a method comprises the steps of: (a) Reducing paper having ink and/or sticky contaminants therein to a finely comminuted liquid-solids suspension flow having a low solids consistency. (b) Introducing the suspension into a first end of a vortex. (c) Sparging air radially inwardly into the suspension in the vortex to cause hydrophobic ink and/or sticky contaminants to attach to air bubbles and move toward the first end of the vortex, a foam being formed, while cellulosic pulp moves to the second end of the vortex, opposite the first end. (d) Removing foam including ink and/or sticky contaminants from a central portion of the first end of the vortex into a first discharge line. (e) Removing pulp from the second end of the vortex into a second discharge line. (f) Connecting the first discharge line to a first receiving tank, foam forming at the top of the first receiving tank. (g) Removing liquid from the bottom of the first receiving tank. And, (h) removing the foam from the top of the first receiving tank.

The first receiving tank has a periphery adjacent a side wall, and the further steps of establishing a swirling action of fluent material in the tank so that foam forming at the top of the tank collects at the periphery of the tank adjacent the side wall, and practicing the removing step only at the periphery of the tank where the foam collects, are also provided. The second discharge line is also preferably connected to a second receiving tank, and pulp is removed from the bottom of the second receiving tank while foam is removed from the top of the second tank. Alternatively, both tanks may have gas blowing means mounted on one side portion, and a foam outlet at an opposite side portion, so that foam is blown into the outlet. A liquid spray at the foam outlet may be used to break foam bubbles, and generally horizontal and vertical baffles may be provided in the tank to prevent short-circuiting of fluent material to the fluent material outlet.

It is the primary object of the present invention to provide for the effective treatment of materials utilizing a gas sparged hydrocyclone, including to effect removal of foam collecting on receiving tank fluid surfaces. This and other objects of the invention will become clear from an inspection of the detailed description of the invention, and from the appended claims.

## BRIEF DESCRIPTION OF THE DRAWINGS

FIGURE 1 is a schematic view showing an exemplary receiving tank according to the present invention in top plan associated with a gas sparged hydrocyclone shown in cross-section;
FIGURE 2 is a side cross-sectional view of the receiving tank of FIGURE 1; and
FIGURE 3 Is a side schematic view of another exemplary embodiment of a receiving tank according to the present invention.

## DETAILED DESCRIPTION OF THE DRAWINGS

According to the present invention a receiving tank 10 is provided for a foam containing suspension. The foam, which may already be existing in the fluent material introduced into the tank 10, or may be caused by air entrained therein when it is introduced into the top of the tank, forms on the top of the surface of the fluent material in the tank 10.

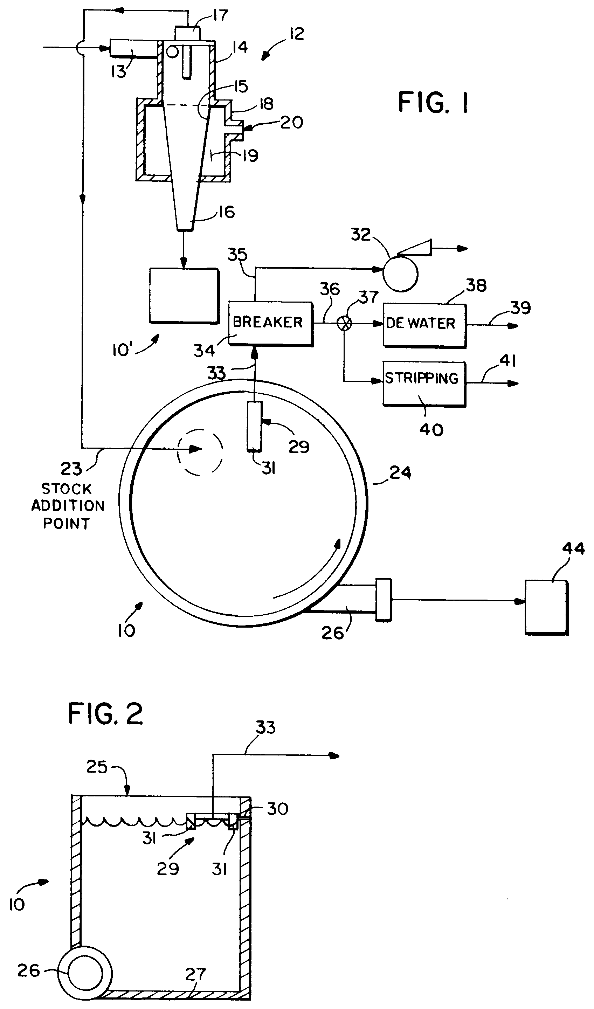

The receiving tank 10 according to the present invention -- and/or a comparable tank 10′ (see FIGURE 1) -- are operatively connected up to a gas sparged hydrocyclone 12. Such a device 12 is shown per se in U.S. patents 4,279,743, 4,399,027, and 4,838,434, and is shown in association with processes for deinking or removing sticky contaminants from paper during recycling.

The hydrocyclone 12 includes a tangential inlet 13 to the top of a hollow body 14, and a porous wall 15 forming part of the body 14. Pulp, or like suspension being treated, passes out of a discharge 16 at a second end of the body 14 remote from the first end into which the inlet 13 introduces suspension to be treated. A discharge 17 is provided at the first end of the body 14, at the center thereof, for withdrawing foam and entrained liquid. A wall 18 is provided surrounding the porous portion 15 of the body 14, defining a gas plenum 19, and gas under pressure is introduced into inlet 20 into plenum 19.

FIGURE 1 illustrates various components Interconnected to a receiving tank 10 which is operatively associated with the first, foam, discharge from 17 of the gas sparged hydrocyclone 12. However similar structures may be associated with the receiving tank of the second discharge 16 of the hydrocyclone 12. Note that a deaerator (not shown) may be provided between the discharge 16 and the tank 10′.

The receiving tank 10 preferably comprises a fluent material inlet 23, and a closed side wall 24, which preferably is circular in cross-section, i.e. is cylindrical in configuration. The tank 10 also preferably has an open top 25 (see FIGURE 2) with a discharge line 26 from adjacent the closed bottom 27 thereof. The discharge line 26 removes fluent material from the tank 10 for disposal or further processing (depending upon whether it is from the accepts or rejects flows from the hydrocyclone 12).

According to the present invention, it is highly desirable to concentrate the foam in particular portions of the tank 10 if possible, to facilitate removal of the foam which forms at the top of the fluid in the tank. One way of effecting this desirable purpose is to provide the discharge line 26 so that it is tangential to the tank 10 side wall 24, so that a swirling action takes place in the tank 10. This swirling action concentrates the foam at the periphery of the top of the tank 10, adjacent the side wall 24, from which it is removed.

Removal of the foam from the tank 10 preferably is accomplished utilizing the structure 29. The structure 29 may comprise either a stationary vacuum box, a floating vacuum box, or an overflow weir. As illustrated generally by reference numeral 30, it can either be affixed to the side wall 24, or tethered thereto (if floating), so that it will remove the foam from the area of the tank fluid material top surface where the foam collects.

Where the structure 29 is a vacuum box, typically it will have closed ends 31, and open sides, as illustrated in FIGURES 1 and 2 in particular, and extends generally radially in the tank 10. It is preferably connected to an air blower 32 including by a conduit 33, which will either be flexible or rigid depending upon whether the structure 29 is floating or fixed.

The foam and entrained liquid in the discharge line 33 of the device 29, carried by the air passing to the blower 32, is desirably separated from the air before the air passes to the blower 32. This is accomplished utilizing the structure 34, which may be a cyclone separator, a foam breaker, or some other means designed to separate entrained liquid and foam from an air stream. From the device 34 a conduit 35 carries the air to the standard blower 32, while a conduit 36 contains the separated foam and entrained liquid.

In the line 36 there may be a valve 37 which can alternatively connect the discharged foam with entrained liquid to a dewatering device 38 having a discharge 39 therefrom, or a stripping device 40 or the like having a discharge 41 therefrom, depending upon the particular nature of the foam. Particularly where the tank 10 is associated with a hydrocyclone 12 used in deinking of recycled paper pulp, and/or removal of sticky contaminants therefrom, the concentrated foam is thickened in dewatering device 38 to form a sludge, which may then be incinerated, landfilled, or otherwise disposed of or processed. The thickened sludge is discharged in line 39. The removed liquid may be used for further slurrying of the suspension fed to the hydrocyclone 12.

Particularly in the case where the hydrocyclone 12 and tank 10 are used in a kraft pulping and waste water system, the foam withdrawn in line 36 is likely to be rich in volatile and/or hydrophobic organic compounds which carry a high load of BOD and COD. In such a case, the foam is led to the device 40 which separates out the BOD and COD high load organic components from the foam, such as by steam stripping or other conventional techniques. The separated high load BOD and COD compounds discharged in line 41 are either burned or subsequently processed.

The discharge conduit 26 from the tank 10 passes the withdrawn suspension, which may be liquid with very few solids therein, or pulp, etc., to a further stage 44 for either further treatment (e.g. as for example further treatment of paper pulp as shown in said U.S. application Serial No. 07/564,656 filed August 9, 1990, or for disposal.

While in FIGURES 1 and 2 stock from a single hydrocyclone 12 is being shown introduced into the open top 25 of the tank 10, and the foam from a single tank 10 is shown as dewatered and/or stripped, it is to be understood that a number of hydrocyclones 12 may discharge into the same tank 10, and the foam streams (e.g. from lines 33 and a common breaker 34, or from separate breakers 34) may be associated with the dewatering equipment 38 or the stripping equipment 40.

While the apparatus illustrated in the drawings is useful in the practice of a number of different procedures, it is particularly desirable in the practice of a method of removing ink and/or sticky contaminants from recycled paper cellulosic pulp containing ink and/or sticky contaminants. In such a case the method comprises the following steps:

(a) Paper to be recycled, having ink and/or sticky contaminants therein, is reduced to a finely comminuted liquid solids suspension flow having a low solids consistency. (b) The suspension is introduced by a conduit 13 into the first end of a body 14 of the hydrocyclone 12, forming a vortex. (c) Air is sparged radially inwardly into the suspension in the vortex, being introduced into plenum 19 through inlet 20 and passing through porous surface 15, to cause hydrophobic ink and/or sticky contaminants to attach to air bubbles and move toward the first end of the vortex, a foam being formed, while the pulp itself moves toward the second end of the vortex opposite the first end. (d) Foam, including ink and/or sticky contaminants is removed from a central portion 17 of the first end of the vortex into the discharge line, while (e) pulp is removed from the second end of the vortex into a second discharge line 16. The first discharge line, from 17, is (f) connected by inlet 23 to a first receiving tank 10, foam forming at the top of the fluid level in the tank 10. (g) Liquid (which may comprise a suspension having some particles) is removed from the bottom of the receiving tank 10 via discharge line 26, while foam is (h) removed from the top 25, utilizing the device 29.

As earlier disclosed, the discharge 26 is preferably tangential to the side wall 24 so that the further step of establishing a swirling action of fluent material in the tank is provided, so that foam forming at the top of the tank collects at the periphery of the tank 10, adjacent wall 24. Foam removal then takes place only at the periphery of the tank adjacent the side wall 24, the device 29 either being attached or tethered thereat.

The foam removal step preferably is accomplished by withdrawing foam and some entrained liquid with an air blower 32, separating the foam and entrained liquid from the air before it reaches the blower, utilizing breaker 34, and then dewatering or stripping the separated out foam and entrained liquid, utilizing devices 38, 40. The second discharge 16 also preferably is connected up to a tank 10′, substantially identical to the tank 10.

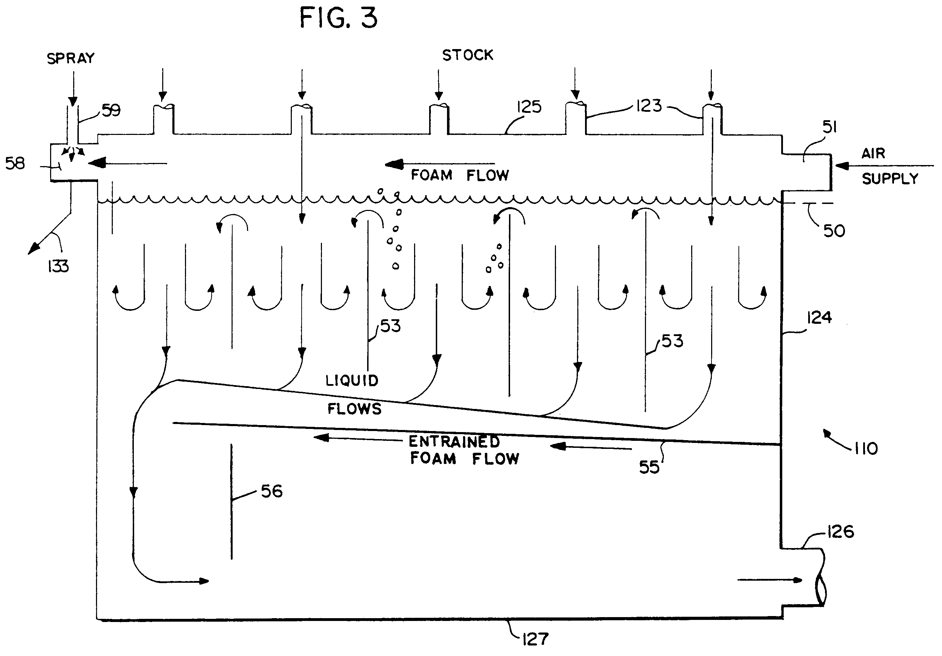

Another embodiment of receiving tank according to the present invention, and for use in practicing the method of the present invention, is shown schematically in FIGURE 3. In the FIGURE 3 embodiment, structures comparable to those in the FIGURES 1 and 2 embodiment are shown by the same reference numeral, only preceded by a "1".

The receiving tank 110 is connected by inlets 123 to one or more hydrocyclones 12, the inlets 123 being connected to either of the outlets 16, 17 of the hydrocyclones 12 depending upon whether the tank 110 is for accepts or rejects. The tank 110 closed side wall 24 may be cylindrical, but in this embodiment preferably is rectangular in plan view. The fluent material outlet 126 is adjacent the bottom 127, and the foam withdrawal conduit 133 is adjacent the top.

In the tank 110, a level 50 of fluent material is established, a surface of fluent material having foam formed or forming thereon. In order to effect removal of the foam, gas blowing means 51 -- such as a connection to a air blower -- are provided at one side portion of the tank 110, opposite the foam withdrawal conduit 133.

Within the tank 110, generally vertical baffles 53 may be provided, one less than the number of inlets 123, for establishing a fluent material (e.g. liquid) flow path within the tank 110. To ensure that all introduced fluent material must traverse a path before discharge longer than a straight line between an inlet 123 and the discharge 126 -- so that there is no short circuiting, and so that there is sufficient time for bubbles to rise to the surface level 50 -- a generally horizontal baffle 55 and a blocking, generally vertical, baffle 56 are provided. The baffle 55 is spaced from the bottoms of the baffles 53, and preferably slopes slightly upwardly (e.g. 2-10 degrees) from the side portion of tank sidewall 124 having the gas blowing means 51 associated therewith toward the side portion with conduit 133.

Actual withdrawal of foam from tank 110 into conduit 133 is preferably provided by the foam outlet 58, which is comparable to a weir. In order to break the foam bubbles before and/or during discharge, to facilitate foam discharge, a liquid spray pipe 59 preferably is provided over the foam outlet 58. The gas under pressure from blowing means 51 is directed generally parallel to the surface level 50 of the fluent material (i.e. liquid or pulp suspension), and carries the foam to the outlet 58.

It will thus be seen that according to the present invention an effective apparatus and method have been provided for the efficient treatment of materials utilizing a hydrocyclone and receiving tank. While the invention has been herein shown and described in what is presently conceived to be the most practical and preferred embodiment thereof, it will be apparent to those of ordinary skill in the art that many modifications may be made thereof within the scope of the invention, which scope is to be accorded the broadest interpretation of the appended claims so as to encompass all equivalent structures and processes.

## Claims

1. A receiving tank (10) for a foam containing suspension, comprising:

   a generally upright tank body having a closed side wall (24) and a closed bottom (27), a top (25) and a center; and an inlet (23) into the top of said tank body; characterized by:

   an outlet (26) from said tank body disposed at said closed side wall generally tangential thereto, and adjacent said closed bottom; and

   means (29) for withdrawing foam from the periphery of said tank body adjacent said closed side wall, adjacent the top thereof.

2. A tank as recited in claim 1 further characterized in that said tank body has a circular cross section, said closed side wall (24) has a cylindrical shape, and said top (25) is open.

3. A tank as recited in claim 1 or 2 further characterized in that said foam withdrawing means comprises a floating vacuum box (29), floating on suspension in the tank, and operatively connected to a source of vacuum (32).

4. A tank as recited in claim 3 further characterized in that said source of vacuum it an air blower (32) connected to said vacuum box by a conduit (33, 35), and further characterized by means (34) for separating entrained liquid and foam from an air stream it disposed in said conduit between said vacuum box and said air blower, said separating means including an entrained liquid and foam discharge line (36).

5. In combination, a gas sparged hydrocyclone (12) and receiving tanks (10, 110, comprising: a gas sparged hydrocyclone including a hollow body (14), a tangential inlet (13) to said hollow body at a first end thereof, to develop a vortex of introduced suspension flowing in said body from said first end thereof to a second end, opposite said first end; a first discharge (17) at a center portion of said first end of said body, and a second discharge (16) at said second end of said body; and means (15, 19, 20) for radially introducing gas under pressure into suspension flowing in said vortex in said body from exteriorly of said vortex; and a first receiving tank (10, 110) operatively connected to said first discharge (17), and a second receiving tank (10) operatively connected to said second discharge (16); characterized in that

   each of said receiving tanks (10, 110) comprises: a generally upright tank body having a closed side wall (24, 124) and a closed bottom (27, 127), a top (25) and a center; an outlet (26, 126) from said tank body adjacent said closed bottom; an inlet (23, 123), connected to a said discharge line, into the top of said tank body; and means (29, 51, 58) for withdrawing foam from said tank body, adjacent the top thereof.

6. A combination as recited in claim 5 further characterized in that the outlet (26) from each of said tanks is tangential to said tank body, adjacent the bottom thereof; and wherein said foam withdrawing means (29) is disposed at the periphery of said tank, adjacent said closed side wall adjacent the top thereof, and comprises a floating vacuum box.

7. A combination as recited in claim 5 or 6 further characterized in that one of said receiving tanks (110) has a level (50) of fluent material therein with a surface, and further comprises a means (51) for supplying gas in a stream generally parallel to the surface of the level of fluent material at one side portion of said tank, and an outlet (58) for foam at an opposite side portion of said tank from said gas supplying means, said outlet comprising means for withdrawing foam from said tank.

8. A combination as recited in claim 7 further characterized in that said receiving tank (110) further comprises a generally horizontal baffle (55) above said outlet (126) requiring that any introduced fluent material follow a relatively long path before it can enter said outlet; and a liquid spray (59) at said foam outlet (58) for impacting and breaking foam bubbles before and/or during discharge of foam from said tank.

9. A method of removing ink and/or sticky contaminants from recycled paper cellulosic pulp containing ink and/or sticky contaminants, comprising the steps of continuously: (a) reducing paper having ink and/or sticky contaminants therein to a finely comminuted liquid-solids suspension flow having a low solids consistency; (b) introducing the suspension into a first end of a vortex; (c) sparging air radially inwardly into the suspension in the vortex to cause hydrophobic ink and/or sticky contaminants to attach to air bubbles and move toward the first end of the vortex, a foam being formed, while cellulosic pulp moves to the second end of the vortex, opposite the first end; (d) removing foam including ink and/or sticky contaminants from a central portion (17) of the first end of the vortex into a first discharge line (23); (e) removing pulp from the second end of the vortex into a second discharge line (16); and characterized by the steps of:

(f) connecting the first discharge line (23) to a first receiving tank (10), foam forming at the top (25) of the first receiving tank;

(g) removing liquid from the bottom of the first receiving tank (through 26); and

(h) removing the foam from the top of the first receiving tank (through 29).

10. A receiving tank (110) comprising: an upright tank body having a closed side wall (124) and closed bottom (127), and a top (125); a fluent material outlet (126) from said tank body adjacent said bottom; and an inlet (123) to said tank body adjacent said top for fluent material having foam therein or causing foam upon entry into said tank body, a level (50) of fluent material, with a surface, being established in said tank body; characterized by:

means (51) for supplying gas in a stream generally parallel to the surface of the level (50) of fluent material at one side portion of said tank; and

an outlet (58) for foam at an opposite side portion of said tank from said gas supplying means.

FIG. 1

FIG. 2

# FIG. 3

SPRAY

STOCK

59

58

133

125

123

51

AIR SUPPLY

FOAM FLOW

50

53

53

124

LIQUID

FLOWS

110

ENTRAINED FOAM FLOW

55

56

126

127

EP 0 485 355 A1

**European Patent Office**

# EUROPEAN SEARCH REPORT

Application Number

EP 91 89 0237

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 007 542 (S. W. GIAMPAPA) <br> * column 2, line 50 - line 71; figures 1-3 * | 1 | B01D19/02 <br> D21B1/32 |
| Y | DE-B-2 738 782 (J. M. VOITH) <br> * the whole document * | 1 | |
| Y | EP-A-0 122 747 (BELOIT WALMSLEY LIMITED) <br> * page 3, line 28 - page 5, line 10; figures 1-3 * | 5 | |
| D,Y | US-A-4 279 743 (JAN D. MILLER) <br> * claims; figures * | 5 | |
| Y <br> A | NL-C-78 570 (STAMMICARBON) <br> * column 2, line 32 - column 4, line 36; figure 1 * | 5 <br> 8 | |
| A | US-A-2 982 409 (J. D. BOADWAY ET AL) <br> * column 2, line 61 - line 71 * | 1 | |
| A | DE-C-193 215 (CARL BORNEMANN) <br> * the whole document * | 3,4 | **TECHNICAL FIELDS SEARCHED (Int. Cl.5)** |
| A | DE-C-400 096 (M. CH. A. SMEDEGAARD) <br> * the whole document * | 3 | B01D <br> D21B <br> D21F <br> B01B |
| A | US-A-4 009 118 (REINO LAIHO) <br> * figure 1 * | 8 | |
| A | FR-A-2 571 629 (KHARKOVSKY POLITEKHNICHESKY INSTITUT IMENI VI LENINA ET AL) <br> * page 6, line 18 - page 8, line 4; figure 1 * | 5,8 | |

The present search report has been drawn up for all claims

| Place of search | Date of completion of the search | Examiner |
|---|---|---|
| THE HAGUE | 02 MARCH 1992 | VAN BELLEGHEM W. |